# EUROPÄISCHE PATENTSCHRIFT

(11) **EP 2 536 958 B1**
(45) Veröffentlichungstag und Bekanntmachung des Hinweises auf die Patenterteilung: **11.11.2015**
(21) Anmeldenummer: 11701973.7
(22) Anmeldetag: 25.01.2011
(51) Int. Cl.: F16B 21/07

(54) **BEFESTIGUNGSVORRICHTUNG**
FASTENING DEVICE
DISPOSITIF DE FIXATION

(30) Priorität: 18.02.2010 DE 102010008458
(43) Veröffentlichungstag der Anmeldung: 26.12.2012
(73) Patentinhaber: A. RAYMOND et Cie, 38000 Grenoble (FR)
(72) Erfinder: DE JONG, Michael, 79589 Binzen (DE); BREITENFELD, Jens, 79539 Lörrach (DE); PODSADNY, Thomas, 21376 Salzhausen (DE)
(74) Vertreter: RACKETTE Patentanwälte PartG mbB
(86) Internationale Anmeldenummer: PCT/EP2011/050965
(87) Internationale Veröffentlichungsnummer: WO 2011/101207

(56) Entgegenhaltungen:
- WO-A1-2010/101803
- DE-A1- 2 309 144
- DE-U1-202006 019 411
- DE-U1-202007 001 575
- GB-A- 2 162 272
- JP-A- 7 293 521
- US-A1- 2006 168 773
- US-A1- 2006 254 032
- US-A1- 2009 242 715

## Beschreibung

Die Erfindung betrifft eine Befestigungsvorrichtung.

Eine beispielhafte Befestigungsvorrichtung ist aus der WO 2010/101803 A1, einem Stand der Tecknik nach Artikel 54(3) EPÜ, bekannt. Diese Befestigungsvorrichtung zum Befestigen eines Anbauteiles an einem Trägerteil verfügt über eine Deckplatte, an der zwei Federschenkel angeformt sind. Jeder Federschenkel weist einen Außenschenkelabschnitt und einen Innenschenkelabschnitt auf, die über einen Umbiegeabschnitt miteinander verbunden sind. Weiterhin ist jeder Federschenkel mit zwei Abstützwangen ausgebildet, die an einem Schenkelabschnitt angeformt sind und die den jeweils anderen Schenkelabschnitt einschließen. Jede Abstützwange ist in einer Abstützwangenfreimachung angeordnet, die in den Außenschenkelabschnitt eingebracht sind und die die an dem Innenschenkelabschnitt angeformten Abstützwangen einschließen. Die Federschenkel verfügen über jeweils zwei Blockierwangen, die in Richtung des anderen Federschenkels weisen. Die Blockierwangen weisen an ihren freien Enden Zungenabschnitte auf, die mit den Zungenabschnitten der an dem gegenüberliegenden Federschenkel angeformten Blockierwange überlappend in Eingriff sind.

Eine weitere Befestigungsvorrichtung ist aus DE 20 2007 001 575 U1 bekannt. Diese Befestigungsvorrichtung zum Befestigen eines Anbauteiles an einem Trägerteil verfügt über eine Deckplatte, an der zwei Federschenkel angeformt sind. Jeder Federschenkel weist einen Außenschenkelabschnitt und einen Innenschenkelabschnitt auf, die über einen Umbiegeabschnitt miteinander verbunden sind. Weiterhin ist jeder Federschenkel mit zwei Abstützwangen ausgebildet, die an einem Schenkelabschnitt angeformt sind und den jeweils anderen Schenkelabschnitt einschließen. Jede Abstützwange ist in einer Abstützwangenfreimachung angeordnet, die in den Außenschenkelabschnitt eingebracht sind und die die an dem Innenschenkelabschnitt angeformten Abstützwangen einschließen.

Eine weitere Befestigungsvorrichtung ist aus DE 20 2006 019 411 U1 bekannt. Diese vorbekannte Befestigungsvorrichtung zum Befestigen eines Anbauteiles an einem Trägerteil verfügt über eine Deckplatte, an der wenigstens zwei Federschenkel angeformt sind. Jeder Federschenkel weist einen Außenschenkelabschnitt und einen Innenschenkelabschnitt auf, die über einen Umbiegeabschnitt miteinander verbunden sind. Weiterhin ist jeder Federschenkel mit zwei Abstützwangen ausgestattet, die an einem Schenkelabschnitt angeformt sind und den jeweils anderen Schenkelabschnitt einschließen. Die Abstützwangen hintergreifen bei bestimmungsgemäßer Anordnung der Befestigungsvorrichtung den Rand einer an einem Trägerteil eingebrachten Aufnahmeausnehmung, so dass die Befestigungsvorrichtung zuverlässig an dem Trägerteil verankert ist.

Aus DE 23 09 144 A ist eine Befestigungsvorrichtung zum Befestigen eines Anbauteiles an einem Trägerteil bekannt, bei der zwei in einem Fußbereich über einen Umbiegeabschnitt miteinander verbundene Federschenkel in in einem Kopfbereich liegenden weiteren Umbiegeabschnitten aneinander anliegen und in nach außen weisenden Kopfabschnitten auslaufen.

Der Erfindung liegt die Aufgabe zugrunde, eine Befestigungsvorrichtung der eingangs genannten Art anzugeben, die sich bereits bei geringer Bewegung der Innenschenkelabschnitte durch besonders hohe Auszugskräfte auszeichnet.

Diese Aufgabe wird bei einer Befestigungsvorrichtung der eingangs genannten Art erfindungsgemäß mit den Merkmalen des Patentanspruches 1 gelöst.

Bei der erfindungsgemäßen Befestigungsvorrichtung ist durch den überlappenden Eingriff der Zungenabschnitte und der damit gebildeten Verschränkung sowie durch den geringen Abstand der einander gegenüberliegenden Kanten der Abstützwangen und der Abstützwangenfreimachungen bereits bei einer geringen Bewegung der Innenschenkelabschnitte eine auch gegenüber hohen Scherkräften verzugsfreie Formstabilität und damit Widerstandsfähigkeit gegen hohe Auszugskräfte erzielt.

Weitere zweckmäßige Ausgestaltungen der Erfindung sind Gegenstand der Unteransprüche.

Weitere zweckmäßige Ausgestaltungen und Vorteile der Erfindung ergeben sich aus der nachfolgenden Beschreibung eines Ausführungsbeispieles mit Bezug auf die Figuren der Zeichnung.

Es zeigen:
- Fig. 1: in einer perspektivischen Ansicht ein Ausführungsbeispiel einer erfindungsgemäßen Befestigungsvorrichtung mit einer Deckplatte, an der zwei Federschenkel angeformt sind,
- Fig. 2: das Ausführungsbeispiel gemäß Fig. 1 in einer Draufsicht auf eine Deckplatte,
- Fig. 3: das Ausführungsbeispiel gemäß Fig. 1 in einer Schnittansicht durch die Federschenkel und
- Fig. 4: das Ausführungsbeispiel gemäß Fig. 1 in einer Schnittansicht mit einer gegenüber der Schnittansicht gemäß Fig. 3 um 90 Grad gedrehten Schnittebene.

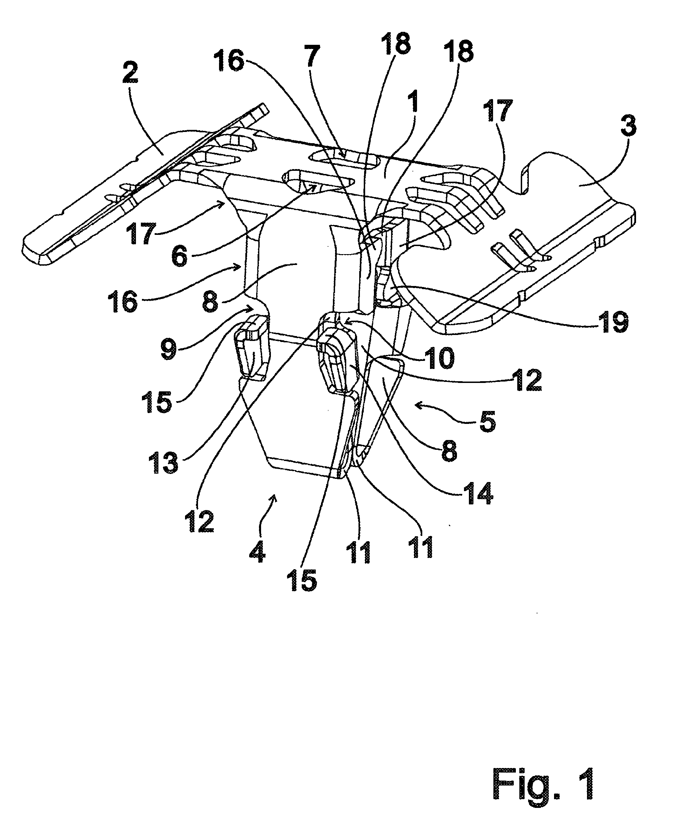

Fig. 1 zeigt in einer perspektivischen Ansicht ein Ausführungsbeispiel einer erfindungsgemäßen Befestigungsvorrichtung. Das in einem Stanz-Biege-Prozess aus einem Metallstreifen hergestellte Ausführungsbeispiel gemäß Fig. 1 verfügt über eine Deckplatte 1 mit einer im Wesentlichen rechteckigen Gestalt, an deren Schmalseiten jeweils eine abgewinkelte Auflagezunge 2, 3 zum Aufliegen an einem in Fig. 1 nicht dargestellten Anbauteil angeformt ist. An den Längsseiten der Deckplatte 1 ist jeweils ein Federschenkel 4, 5 angeformt, die sich von der Deckplatte 1 weg erstrecken. Weiterhin sind in die Deckplatte 1 in etwa in der Mitte der langen Längsseiten, an denen die Federschenkel 4, 5 angesetzt sind, zwei Zugriffsöffnungen 6, 7 eingebracht, die einen Zugriff von der den Federschenkeln 4, 5 abgewandten Seite der Deckplatte 1 in den von den Federschenkeln 4, 5 umschlossenen Innenraum gestatten.

Jeder Federschenkel 4, 5 verfügt als einen ersten Schenkelabschnitt über einen Außenschenkelabschnitt 8, der mit der Deckplatte 1 verbunden ist. In jedem Außenschenkelabschnitt 8 sind nach außen offene Abstützwangenfreimachungen 9, 10 ausgebildet, die in Längsrichtung in etwa in der Mitte der Außenschenkelabschnitte 8 liegen.

An den von der Deckplatte 1 abgewandten Enden der Außenschenkelabschnitte 8 ist jeweils ein Umbiegeabschnitt 11 vorhanden, der jeden Außenschenkelabschnitt 8 mit einem Innenschenkelabschnitt 12 als zweiten Schenkelabschnitt verbindet. Die Innenschenkelabschnitte 12 sind in dem Innenraum zwischen den Außenschenkelabschnitten 8 angeordnet und erstrecken sich von den Umbiegeabschnitten 11 in Richtung der Deckplatte 1. An jedem Innenschenkelabschnitt 12 sind zwei Abstützwangen 13, 14 ausgebildet, die sich von den Innenschenkelabschnitten 12 weg durch die Abstützwangenfreimachungen 9, 10 über die Außenseite der Außenschenkelabschnitte 8 hinaus erstrecken. Die Abstützwangen 13, 14 sind dabei in etwa rechtwinklig zu den Außenschenkelabschnitten 8 und den Innenschenkelabschnitten 12 ausgerichtet und mit nach außen weisenden Kantenanprägungen versehen, um die Montagekraft relativ gering zu halten.

Jede Abstützwange 13, 14 verfügt an ihrem den Umbiegeabschnitten 11 abgewandten Ende über einen Anlageabschnitt 15, die gegenüber den Abstützwangen 13, 14 rechtwinklig und zu der Deckplatte 1 in etwa parallel ausgerichtet ist, wobei die Anlageabschnitte 15 von an einem Innenschenkelabschnitt 12 ausgebildeten Abstützwangen 13, 14 aufeinander zu weisen.

Bei bestimmungsgemäßer Anordnung der erfindungsgemäßen Befestigungsvorrichtung hintergreifen die Anlageabschnitte 15 den Rand einer in einem in Fig. 1 nicht dargestellten Trägerteil eingebrachten Aufnahmeausnehmung, so dass dann das Anbauteil an dem Trägerteil befestigt ist.

Zwischen der Deckplatte 1 und den Abstützwangenfreimachungen 9, 10 sind an den Außenschenkelabschnitten 8 an den den Auflagezungen 2, 3 zugewandten Randseiten Blockierwangen 16, 17 angeformt, die sich in Richtung des jeweils anderen Außenschenkelabschnittes 8 erstrecken und mit jeweils zwei Zungenabschnitten 18, 19 ausgebildet sind, die gegeneinander verschränkt sind und mit den Zungenabschnitten 18, 19 der gegenüber liegenden Blockierwange 16, 17 überlappen. Dadurch ist ein Anschlag für die Einbiegung der Außenschenkelabschnitte 8 gegeben.

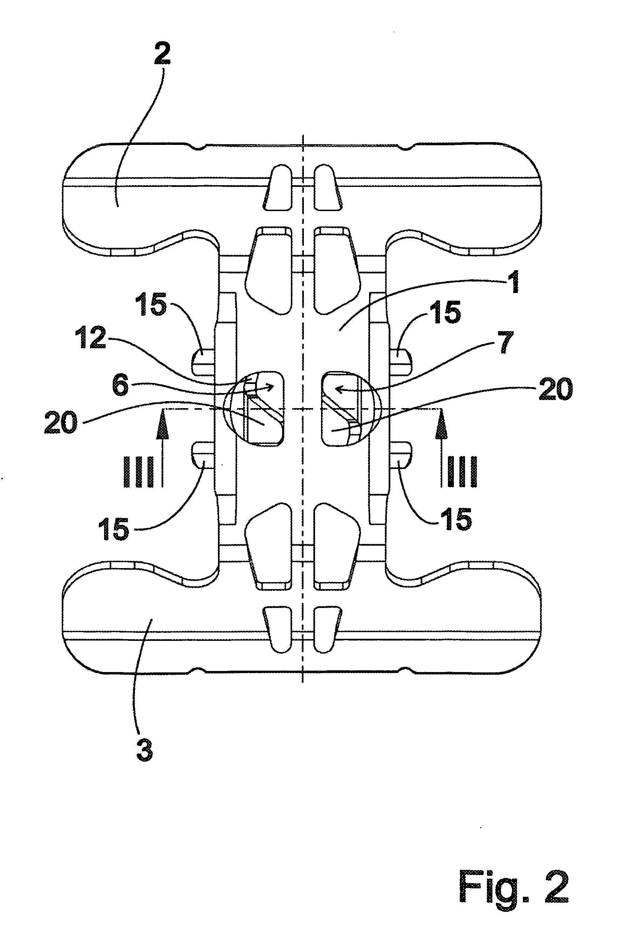

Fig. 2 zeigt das Ausführungsbeispiel gemäß Fig. 1 in einer Draufsicht auf die Deckplatte 1 mit Blick durch die Zugriffsöffnungen 6, 7. Aus Fig. 2 ist ersichtlich, dass an den Innenschenkelabschnitten 12 jeweils eine Zugriffszunge 20 angeformt ist, die gegenüber den Innenschenkelabschnitten 12 abgewinkelt sind. Dadurch lassen sich bei Einschieben von zwei Gabelzinken eines in Fig. 2 nicht dargestellten Demontagewerkzeugs die Innenschenkelabschnitte 12 von den Außenschenkelabschnitten 8 weg aufeinander zu bewegen. Dadurch können die bei relaxierter Anordnung der Federschenkel 4, 5 über die Außenschenkelabschnitte 8 überstehenden Abstützwangen 13, 14 in eine mit den Außenseiten der Außenschenkelabschnitte 8 wenigstens bündige Anordnung bewegt werden, um die erfindungsgemäße Befestigungsvorrichtung außer Eingriff mit einem in Fig. 2 nicht dargestellten Trägerteil zu bringen, an dem das Anbauteil anzubringen ist.

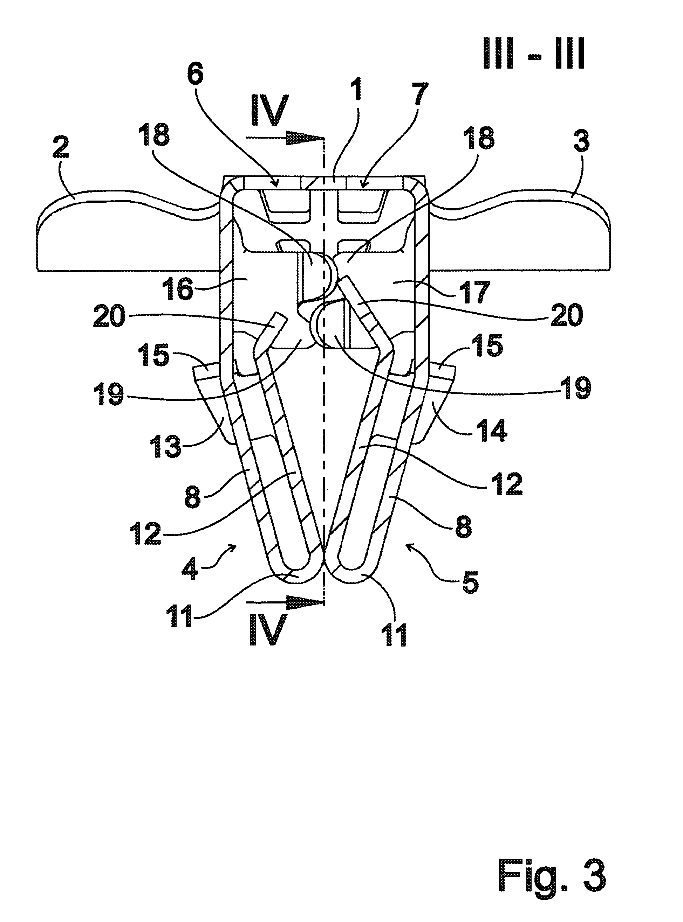

Fig. 3 zeigt das Ausführungsbeispiel gemäß Fig. 1 in einem Längsschnitt entlang der Linie III - III von Fig. 2 durch die Federschenkel 4, 5. Aus Fig. 3 lässt sich besonders gut die überlappende Anordnung der Zungenabschnitte 18, 19 erkennen, die den Einfederweg der Außenschenkelabschnitte 8 begrenzt.

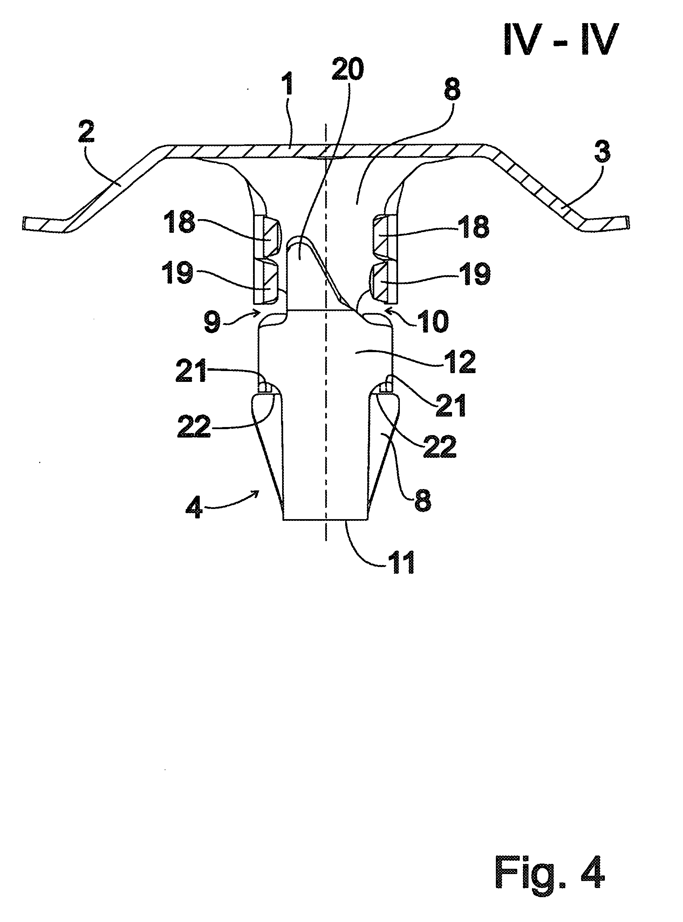

Fig. 4 zeigt das Ausführungsbeispiel gemäß Fig. 1 in einer Schnittansicht entlang der Linie IV - IV von Fig. 3 mit einer gegenüber der Schnittebene von Fig. 3 um 90 Grad gedrehten Schnittebene. Aus Fig. 4 ist ersichtlich, dass die der Deckplatte 1 abgewandten Kanten 21 der Abstützwange 13, 14 in einem geringen, höchstens der Materialstärke des Metallbleches entsprechenden Abstand den der Deckplatte 1 zugewandten Kanten 22 der Abstützwangenfreimachungen 9, 10 gegenüber liegen, so dass die Kanten 21, 22 bereits bei einer sehr geringen Relativbewegung der Inrienschenkelabschnitte 12 von der Deckplatte 1 miteinander in Anschlag kommen und somit der erfindungsgemäßen Befestigungsvorrichtung eine sehr hohe Widerstandskraft gegenüber hohen Auszugskräften verliehen ist.

## Patentansprüche

1. Befestigungsvorrichtung zum Befestigen eines Anbauteiles an einem Trägerteil, mit einer Deckplatte (1), an der wenigstens zwei Federschenkel (4, 5) angeformt sind, die jeweils einen Außenschenkelabschnitt (8) und einen Innenschenkelabschnitt (12) aufweisen, die über eignen Umbiegeabschnitt (11) miteinander verbunden sind, wobei jeder Federschenkel (4, 5) zwei Abstützwangen (13, 14) aufweist, die an einem Schenkelabschnitt (8, 12) angeformt sind und den jeweils anderen Schenkelabschnitt (8, 12) einschließen, wobei jede Abstützwange (13, 14) in einer Abstützwangenfreimachung (9, 10) angeordnet ist, die in den Außenschenkelabschnitt (8) eingebracht sind und die die an dem Innenschenkelabschnitt (12) angeformten Abstützwangen (13, 14) einschließen, wobei die Federschenkel (4, 5) jeweils zwei Blockierwangen (16, 17) aufweisen, die in Richtung des anderen Federschenkels (4, 5) weisen, wobei die Blockierwangen (16, 17) an ihren freien Enden über Zungenabschnitte (18, 19) verfügen, die mit den Zungenabschnitten (18, 19) der an dem gegenüber liegenden Federschenkel (4, 5) angeformten Blockierwange (16, 17) überlappend in Eingriff sind, wobei die den Umbiegeabschnitten (11) zugewandten Kanten (21) der Abstützwangen (13, 14) und die der Deckplatte (1) zugewandten Kanten (22) der Abstützwangenfreimachungen (9, 10) in relaxierter Anordnung der Federschenkel (4, 5) höchstens in einer der Materialstärke der Abstützwangen (13, 14) entsprechenden Abstand voneinander beabstandet sind.

2. Befestigungsvorrichtung nach Anspruch 1, **dadurch gekennzeichnet, dass** die der Deckplatte (1) abgewandten Kanten (21) der Abstützwangen (13, 14) und die der Deckplatte (1) zugewandten Kanten (22) der Abstützwangenfreimachungen (9, 10) rechtwinklig zueinander ausgerichtet sind.

3. Befestigungsvorrichtung nach Anspruch 1 oder Anspruch 2, **dadurch gekennzeichnet, dass** die Abstützwangen (13, 14) an ihren der Deckplatte (1) zugewandten Seiten jeweils einen Anlageabschnitt (15) aufweisen, der parallel zu der Deckplatte (1) ausgerichtet ist.

4. Befestigungsvorrichtung nach einem der Ansprüche 1 bis 3, **dadurch gekennzeichnet, dass** die Deckplatte (1) wenigstens eine Zugriffsöffnung (6, 7) aufweist und dass an jedem Federschenkel (4, 5) eine Zugriffszunge (20) ausgebildet ist, die über die oder jede Zugriffsöffnung (6, 7) zum Lösen eines Hintergriffs der Federschenkel (4, 5) mit dem Trägerteil für ein Werkzeug zugänglich ist.

## Claims

1. Fastener for fastening an added part to a carrying part, having a top plate (1) on which are integrally formed at least two resilient legs (4, 5) each of which has an outer leg-portion (8) and an inner leg-portion (12) which are connected together by a folded-round portion (11), each resilient leg (4, 5) having two supporting cheek-pieces (13, 14) which are integrally formed on a leg-portion (8, 12) and which enclose whichever is the other leg-portion (8, 12), each supporting cheek-piece (13, 14) being arranged in an aperture or recess (9, 10) for a supporting cheek-piece, which apertures or recesses (9, 10) for supporting cheek-pieces are made in the outer leg-portion (8) and contain the supporting cheek-pieces (13, 14) integrally formed on the inner leg-portion (12), the resilient legs (4, 5) each having two blocking cheek-pieces (16, 17) which point in the direction of the other resilient leg (4, 5), the blocking cheek-pieces (16, 17) having at their free ends tongue portions (18, 19) which are in overlapping engagement with the tongue portions (18, 19) of the blocking cheek-pieces (16, 17) integrally formed on the resilient leg (4, 5) situated opposite, those edges (21) of the supporting cheek-pieces (13, 14) which face towards the folded-round portions (11) and those edges (22) of the apertures or recesses (9, 10) for supporting cheek-pieces which face towards the top plate (1) being spaced apart from one another, when the resilient legs (4, 5) are in a relaxed position, by not more than a distance corresponding to the thickness of the material of the supporting cheek-pieces (13, 14).

2. Fastener according to claim 1, **characterised in that** those edges (21) of the supporting cheek-pieces (13, 14) which face away from the top plate (1) and those edges (22) of the apertures or recesses (9,10) for supporting cheek-pieces which face towards the top plate (1) are aligned at right angles to one another.

3. Fastener according to claim 1 or claim 2, **characterised in that**, at their ends facing towards the top plate (1), the supporting cheek-pieces (13, 14) each have a portion for contact (15) which is aligned parallel to the top plate (1).

4. Fastener according to one of claims 1 to 3, **characterised in that** the top plate (1) has at least one access opening (6, 7) and **in that** there is formed on each resilient leg (4, 5) a tongue (20) to be accessed which is accessible to a tool, via the or each access opening (6, 7), to allow the resilient legs (4, 5) to be released from an engagement behind the carrying part.

## Revendications

1. Dispositif de fixation pour fixer un élément rapporté sur un élément faisant office de support, se composant d'une plaque de recouvrement supérieure (1) comportant au-moins deux pattes élastiques attenantes (4, 5) réalisées solidaires de celle-ci par moulage, qui définissent respectivement une portion formant segment extérieur (8) et une portion formant segment intérieur (12) qui sont respectivement raccordées l'une à l'autre par une portion recourbée (11), chaque patte élastique (4, 5) comportant en l'occurrence deux portées d'appui (13, 14), qui sont réalisées solidaires par moulage d'une portion formant segment (8, 12) et qui enserrent respectivement l'autre portion formant segment (8, 12), chaque portée d'appui (13, 14) étant en l'occurrence disposée dans un dégagement pour portée d'appui (9, 10), dégagements qui sont ménagés dans la portion formant segment extérieur (8) et qui enserrent les portées d'appui (13, 14) réalisées solidaires par moulage de la portion formant segment intérieur (12), dans lequel les pattes élastiques (4, 5) comportent respectivement deux segments de blocage (16, 17) qui sont orientés dans la direction de l'autre patte élastique (4, 5), les segments de blocage (16, 17) étant en l'occurrence munis, au niveau de leurs extrémités libres, de portions formant languettes (18, 19), qui sont, selon une disposition en recouvrement, en prise d'encastrement avec les portions formant languettes (18, 19) des segments de blocage (16, 17) réalisés solidaires par moulage de la patte élastique (4, 5) diamétralement opposée, les bords (21) des portées d'appui (13, 14) orientés vers les portions recourbées (11) et les bords (22) des portées d'appui (9, 10) orientés vers la plaque de recouvrement supérieure (1) étant en l'occurrence, dans la position de relâchement des pattes élastiques (4, 5), respectivement distants l'un de l'autre au maximum dans la proportion d'un intervalle d'écartement correspondant à l'épaisseur des portées d'appui (13, 14).

2. Dispositif de fixation selon la revendication 1, **caractérisé en ce que** les bords (21) des portées d'appui (13, 14) orientés à l'opposé de la plaque de recouvrement supérieure (1) et les bords (22) des dégagements pour portée d'appui (9, 10) orientés en direction de la plaque de recouvrement supérieure (1) sont respectivement orientés perpendiculairement l'un par rapport à l'autre.

3. Dispositif de fixation selon la revendication 1 ou la revendication 2, **caractérisé en ce que** les portées d'appui (13, 14) comportent respectivement, au niveau de leurs côtés en direction de la plaque de recouvrement supérieure (1) une portion d'assise (15), qui est orientée parallèlement à la plaque de recouvrement supérieure (1).

4. Dispositif de fixation selon l'une des revendications 1 à 3, **caractérisé en ce que** la plaque de recouvrement supérieure (1) comporte au moins une ouverture d'accès (6, 7) et **en ce qu'**il est prévu, sur chaque patte élastique (4, 5), une languette accessible (20), à laquelle on peut accéder, en passant par la ou chaque ouverture d'accès (6, 7), pour désolidariser, au moyen d'un outil, les pattes élastiques (4, 5) et l'élément faisant office de support de leur emprise de cramponnement par derrière réciproque.
